# EUROPEAN PATENT APPLICATION

(11) **EP 4 846 825 A1**
(43) Date of publication of application: **02.12.2026**
(21) Application number: 26174021.1
(22) Date of filing: 22.04.2026
(51) Int. Cl.: A01B 79/00, A01D 34/00, A01D 34/66

(54) **SYSTEM AND METHOD FOR PLANNING A POST-PROCESSING AGRICULTURAL OPERATION**

(30) Priority: 28.05.2025 GB 202508281
(71) Applicant: AGCO International GmbH, 8212 Neuhausen am Rheinfall (CH)
(72) Inventor: Duering Jensen, Kenneth, DK-8930 Randers (DK)
(74) Representative: AGCO Intellectual Property Department

(57) **Abstract**

Systems and methods are provided for planning a post-processing operation in a working environment. Sensor data from a sensor arrangement mounted or otherwise coupled to a mowing unit of a tractor-mower combination operating within the working environment is used to determine a measure of a swath profile for a swath of crop material formed by the mowing unit, in use. In dependence on the swath profile measure, a recommended operational plan is determined for a post-processing operation for the working environment, such as a collection operation, or a tedding or raking operation as necessary. The recommended operational plan may be communicated to an operational planning tool.

## Description

### CROSS-REFERENCE TO RELATED APPLICATIONS

Not applicable.

### FIELD

Embodiments of the present disclosure relate generally to systems and methods for planning a post-processing operation for an agricultural working environment.

### BACKGROUND

It is known to mount or otherwise couple implements, and specifically mowing implements to agricultural vehicles such as tractors. Such implements may be front mounted or may be towed by the vehicle. Additionally, some mowing implements are integrated fully with a machine, thereby providing a self-contained and self-propelled mowing apparatus such as a windrower. It has been identified that through monitor of the cutting performance of such mowing implements additional benefits can be realised in terms of post-processing of the cut crop material.

### BRIEF SUMMARY

According to an aspect of the disclosure there is provided a control system for planning a post-processing operation in a working environment, the control system comprising one or more controllers, and being configured to: receive sensor data from a sensor arrangement mounted or otherwise coupled to a mowing unit of a tractor-mower combination operating within the working environment and having a sensing region which encompasses a ground surface proximal to the mowing unit; analyse the sensor data to determine a measure of a swath profile for a swath of crop material formed by the mowing unit, in use; and determine, in dependence on the swath profile measure a recommended operational plan for a post-processing operation for the working environment.

Advantageously, the solution provided by the present disclosure provides a means for monitoring a mowing process, specifically looking at the swath profile produced by a tractor-mower combination operating in a working environment, and using this to inform a post-processing operation, such as a raking, tedding, collection operation for the cut crop material.

The one or more controllers may collectively comprise an input (e.g. an electronic input) for receiving one or more input signals. The one or more input signals may comprise the sensor data. The one or more controllers may collectively comprise one or more processors (e.g. electronic processors) operable to execute computer readable instructions for controlling operation of the control system, for example, to analyse the sensor data and/or determine the measure of the swath profile, and/or determine the recommended operational plan. The one or more processors may be operable to generate one or more control signals for controlling operation of associated operational components, e.g. a communication module communicable coupled with the controller(s) for communicating the recommended operational plan to a data store, e.g. a remote server. The one or more controllers may collectively comprise an output (e.g. an electronic output) for outputting the one or more control signals.

The control system may be operably connected to an operational planning tool, which may be hosted locally or on a remote server, such as a cloud-based server. For example, in use, the control system may output the recommended operational plan to the operational planning tool for planning (and optionally executing) the post-processing operation. The operational planning tool may be accessible via a remote or mobile user device by an operator or user of the control system for planning the post-processing operation.

The swath profile may comprise a measure of an amount or distribution of crop material. This may include a size or shape of a swath produced by the tractor-mower combination.

The swath profile may be used by the one or more controllers to determine a measure of crop yield for the working environment. The crop yield may inform the post-processing operation, e.g. in relation to a number or capacity required for a collection apparatus (e.g. loader wagons, trailers, etc.) for collecting the cut crop material from the working environment. The recommended operational plan in such embodiments may therefore comprise a recommended number of support or collection vehicles for the post-processing operation.

The swath profile may be used by the one or more controllers for determining a recommended operational setting for one or more components or machines performing or to perform the post-processing operation. This may include a recommended operational speed for the machine, e.g. a forward speed for the observed swath profile. Advantageously, the operational plan may account for larger areas of swath where a reduction (e.g.) in forward speed of a collection machine, such as a forage harvester, loader wagon etc. might be beneficial. The recommended operational setting(s) may relate to components of a machine performing the post-processing operation. This may include recommended operational settings (e.g. a speed or position) of a crop pickup associated with a collection machine. Where the post-processing operation includes a raking or tedding operation, this may include an operational speed of one or more crop engaging components thereof. Advantageously, where the post-processing operation comprises a tedding operation, the operational speed of one or more tines or other crop engaging components may be increased (e.g.) for areas with a larger observed swath profile, or a height thereof may be adjusted to account for variations in the swath profile.

Determining the recommended operational plan may include the generation of a swath map representative of a swath profile characteristic for the working environment.

In embodiments, the control system, e.g. one or more controllers thereof, may be hosted locally. That is, the one or more controllers may form part of an electronic control unit or system of the tractor-mower combination. In other embodiments, the control system may be provided as a distributed control system, with one or more controllers being provided remote from the tractor-mower combination.

A further aspect provides a method for planning a post-processing operation in a working environment, comprising: receiving sensor data from a sensor arrangement mounted or otherwise coupled to a mowing unit of a tractor-mower combination operating within the working environment and having a sensing region which encompasses a ground surface proximal to the mowing unit; analysing the sensor data to determine a measure of a swath profile for a swath of crop material formed by the mowing unit, in use; and determining, in dependence on the swath profile measure a recommended operational plan for a post-processing operation for the working environment.

The method may comprise performance of the operational steps for which the one or more controllers of any of the preceding aspects of the disclosure are configured.

A yet further aspect provides computer software which, when executed by one or more processors, causes performance of the method of the preceding aspect of the disclosure.

Another aspect of the disclosure provides an agricultural machine, comprising: a tractor, a mowing unit operably coupled to the tractor for cutting crop material growing in a working environment; a sensor arrangement operably mounted to the mowing unit and having a sensing region which encompasses a ground surface proximal to the mowing unit; and a control system of any preceding aspect described herein; wherein the one or more controllers are configured to provide the recommended operational plan to an operational planning tool for planning a post-processing operation for the working environment.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified top down view illustrating an agricultural machine embodying aspects of the present disclosure;
FIG. 2 is a simplified side cross-sectional view of a mowing unit forming part of the agricultural machine of FIG. 1; and
FIG. 3 is a schematic view of a control system of the present disclosure.

### DETAILED DESCRIPTION

The figures illustrate embodiments of the present disclosure, which provides an agricultural machine here in the form of a tractor mower combination 2 comprising a tractor 4 which includes multiple mowing units 6, 8, 10 operably mounted thereto. It will be appreciated here that alternative embodiments may include different numbers of mowing units, e.g. a single mowing unit. The mowing units 6, 8, 10 are configured for cutting crop material C growing in a working environment. A sensor arrangement, here comprising a camera 20, is operably mounted to the agricultural machine or one or more components thereof, specifically here an underside of a frame 30 of the mowing unit 8 and having a sensing region which encompasses a ground surface proximal to the machine, here in the region behind a conditioning unit 40 of the mowing unit 8 and encompassing a swath Sw being formed on the ground surface behind the mowing unit 8 during operation. Sensor data from the camera 20 is used to determine a measure of a swath profile associated with the swath Sw formed by the mowing unit 8 which in turn is used to determine a recommended operational plan for a post-processing operation for the working environment, as is discussed in detail herein.

### Agricultural Machine

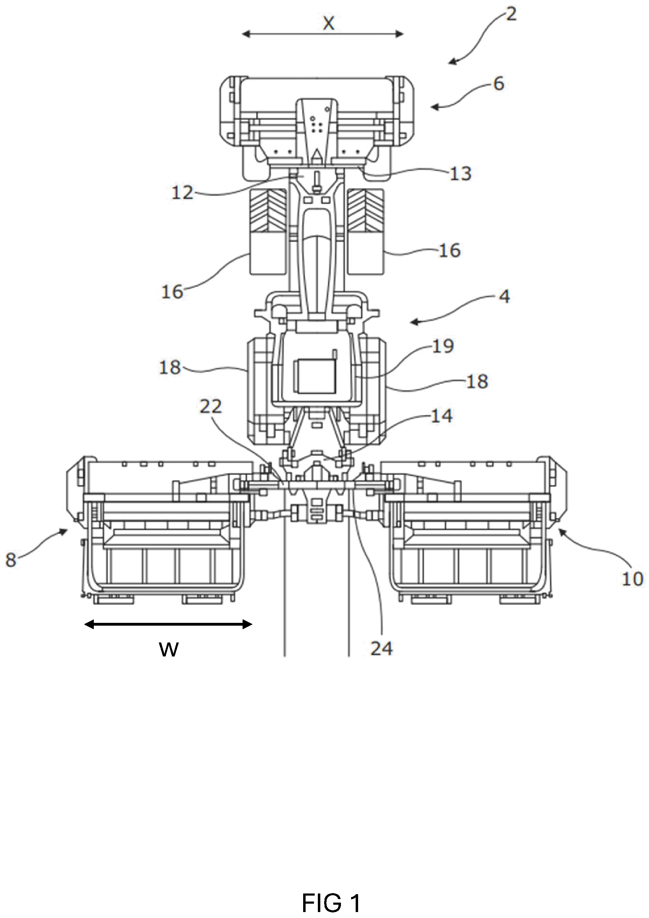

FIG. 1 is a schematic top down view of an agricultural machine 2 in the form of a tractor mower combination formed of a tractor 4, and an implement in the form of a front mowing unit 6. In the illustrated embodiment, tractor 4 comprises front and rear wheels 16, 18, any or all of which may be steerable as will be appreciated, along with an operator cab 19. The machine 2 forms a "butterfly-mower" arrangement which additionally includes first and second rear mowing units 8, 10. The front mowing unit 6 is operably coupled at a front hitch 12 of the tractor 4 and is moveable under the operation of an actuator mechanism 13. The first and second rear mowing units 8, 10 are operably coupled to a rear hitch 14 of the tractor 4 by respective mounting mechanisms 22, 24. As will be appreciated, the mounting mechanisms 22, 24 may be configured to allow the rear mowing units 8, 10 to be folded between operating (e.g. as shown in FIG 1) and a storage position - e.g. folded upwardly and inwards for transport and/or storage of the machine 2. Mounting mechanisms 22, 24 may additionally be configured for adjusting an operational position of the respective mowing units 8, 10, for example through control over the vertical height, horizontal position and/or pitch, yaw or tilt of the mowing units 8, 10. The mounting mechanisms 22, 24 may comprise suitably configured actuators for this purpose, as will be appreciated. As shown in FIG 1, in an operating position, first and second rear mowing units 8, 10 are positioned such that they are laterally spaced either side of a longitudinal axis of the tractor 4. As will be appreciated, at least the rear mowing units 8, 10 may be powered by a suitable mechanical coupling with a power take off shaft of the tractor 4 (not shown).

Whilst shown here in a "butterfly mower" arrangement, it will be appreciated that the disclosure is not limited in this sense, and the machine may be formed of a tractor with a single mowing unit, e.g. mowing unit 8, or may be a self-propelled mower / windrower having an integrated mowing unit.

### Mowing Unit

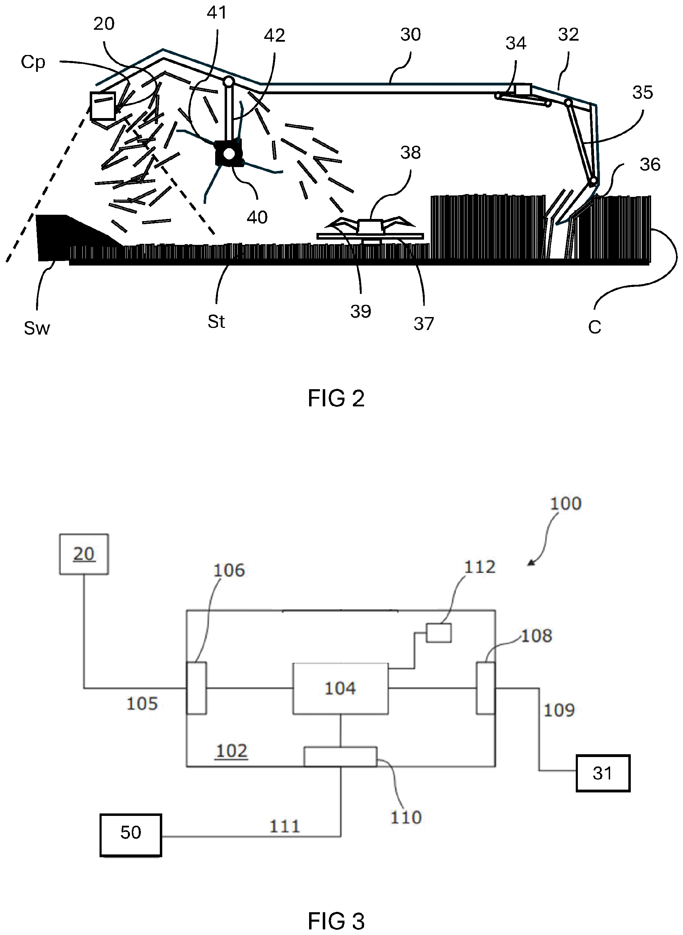

FIG. 2 illustrates an example mowing unit, here mowing unit 8, in more detail. The mowing unit 8 is formed of a frame 30 having a moveable curtain 32 arranged at a foremost section of the mowing unit 8, in a direction of motion, in use. The curtain 32 is moveable in a substantially horizontal direction with respect to the frame 30 under operation of a linear actuator 34 (which could be pneumatic, hydraulic or electric, as desired). The curtain 32 additionally includes and end section 36 connected to and moveable with respect to the remainder of the curtain 32. This movement may be manual, e.g. under impact with other objects such as crop material, but in the illustrated embodiment a further linear actuator 35 is provided for controlling this movement.

The mowing unit 8 additionally includes a cutting system here in the form of a series of rotary cutter discs 38 operably mounted to a cutter bar 37. Only a single cutter disc is displayed here for simplicity, however the skilled reader will understand how a series of cutter discs may be provided across a working width of the mowing unit 8, each of which being rotatable about substantially vertical axes defined by a central hub of the cutter discs 38. Such an arrangement is conventional in the technical field. The cutter discs 38 comprise a series of cutting elements 39 providing a working surface thereof for cutting crop material, in use.

The illustrated mowing unit 8 also incorporates a conditioning unit 40 here formed as a tine conditioner 40 having a rotor supported on the frame 30 of the mowing unit and having a series of tines 41 moveable in a circular path upon rotation of the rotor about a central axis. Again, such an arrangement is common in the field. The conditioning unit 40 of the illustrated embodiment is moveable in a substantially vertical direction under the action of a linear actuator 42. Movement of the conditioning unit 40 under the operation of the actuator 42 is used to adjust a conditioning path for cut crop material Cp between the tines 41 and the frame 30. As will be appreciated, adjustment of this conditioning path may advantageously adjust a level of conditioning applied to the cut crop material Cp, in use.

Cut (and optionally conditioned) crop material may be subsequently formed into a swath Sw left on the ground behind the machine 2, in use. The swath Sw may be collected and/or processed further through performance of one or more post-processing operations. The mowing unit 8 may include one or more guiding surfaces downstream of the conditioning unit 40 for controlling the placement of the swath Sw on the ground surface. A recommended operational plan for said post-processing operations is determined herein in dependence on a measure of the swath profile generated by the mowing unit 8m as is discussed in detail herein.

For this purpose, the mowing unit 8 is additionally provided with a sensor arrangement here in the form of a camera 20 operably mounted to the frame 30 of the mowing unit. The camera 20 has a sensing region which encompasses a ground surface behind the conditioning unit 40 (illustrated by the dotted lines in FIG. 2) and encompassing a ground region behind the mowing unit 8 where the swath Sw is formed, in use. In this embodiment, image data from the camera 20 is analysed (see below for a detailed discussion thereof) for determining a measure of the profile of the formed swath Sw, which in turn is used to inform a recommended operational plan for the post-processing operation.

### Control System

FIG 3 illustrates the control system 100. As shown, control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present disclosure discussed herein, e.g. by determining the swath profile measure, and for determining the recommended operational plan.

The processor 104 is operable to receive sensor data via input 106 which, in the illustrated embodiment, takes the form of input signals 105 received from the camera 20. As discussed in detail hereinbelow, utilising this data, the processor 104 is configured to analyse the data and determine therefrom a measure of a swath profile for a swath Sw of crop material formed by the mowing unit 8. The processor 104 then utilises the swath profile measure determined from the sensor data to determine a recommended operational plan for a post-processing operation in the working environment, e.g. a collection of the swath material (e.g. by a loader wagon or baler) or a tedding or raking operation, as may be necessary.

Output 108 is operably coupled to a user interface here in the form of a display terminal 31 associated with the tractor 4, e.g. a display terminal provided in an operator cab 19 of the tractor 4. The control system 100 is operable to control or inform operation of the display terminal 31, in the illustrated embodiment through output of control signals 109 via output 108 for receipt at a local control unit of the display terminal 31 for controlling operation thereof, here for presenting to an operator of the tractor a graphical representation of the recommended operational plan and/or the swath profile.

FIG 3 additionally illustrates a further feature of embodiments of the control system 100, and a variant of the present disclosure. Specifically, controller 102 includes an electronic output 110 which is operably coupled to a communications module 50 of the agricultural machine 2. The communications module 50 is configured for communicating, e.g. wirelessly over a communications network (e.g. a cellular network) with one or more further terminals on the network. This may include, in the present case, a remote data server upon which is hosted an operational planning tool for the post-planning tool. The control system 100 is configured here to communicate to the remote server the recommended operational plan, determined through the measure of the swath profile produced by the mowing unit 8 for interpretation and implementation by the remotely hosted operational planning tool.

In an extension of this, the remote server and planning tool hosted thereon may be accessible by an operator through a further remote data connection, e.g. utilising a user device, or computer terminal. One or more further machines may be controllable under operation of the planning tool. For instance, recommended operational settings for machine(s) performing the post-processing operations may be automatically loaded onto such machines ahead of performance of post-processing operation, or may be retrieved by an operator of those machines and used as an assistance tool to guide the post-processing operation.

As discussed herein, the recommended operational settings may include a recommended operational speed for the machine, e.g. a forward speed for the observed swath profile, recommended operational settings (e.g. a speed or position) of a crop pickup associated with a collection machine, a recommended operational speed of one or more crop engaging components of a machine, etc.

### Swath Profile Determination

The process begins with collection and receipt of sensor data by the sensor arrangement. In the illustrated embodiments this comprises the collection of optical sensor data from the camera 20. The sensor data is analysed to determine a measure of a swath profile Sw formed by the mowing unit 8 as it moves through the working environment. The swath profile may comprise a measure of an amount or distribution of crop material, which can include a size or shape of a swath produced by the tractor-mower combination 2. This can be obtained through an object recognition process applied to the sensor data from the camera 20, identifying a boundary or upper/outer limit of the swath material in the image and determining a profile therefrom.

Utilising the swath profile measure, a recommended operational plan for the working environment, and specifically for a post-processing operation can be determined. In some instances, the swath profile measure is used to determine a measure of crop yield for the working environment, which in turn may inform the post-processing operation in relation to a number or capacity required for a collection apparatus (e.g. loader wagons, trailers, etc.) for collecting the cut crop material Cp from the working environment. Here, the recommended operational plan can include a recommended number of support or collection vehicles for the post-processing operation, for example.

In some variants, the swath profile can be used for a recommended operational setting for one or more components or machines performing or to perform the post-processing operation. This may include a recommended operational speed for the machine, e.g. a forward speed for the observed swath profile, which may advantageously account for larger areas of swath where a reduction (e.g.) in forward speed of a collection machine, such as a forage harvester, loader wagon etc. might be beneficial. The recommended operational setting(s) can relate to components of a machine performing the post-processing operation. This may include recommended operational settings (e.g. a speed or position) of a crop pickup associated with a collection machine. Where the post-processing operation includes a raking or tedding operation, this may include an operational speed of one or more crop engaging components thereof. Advantageously, where the post-processing operation comprises a tedding operation, the operational speed of one or more tines or other crop engaging components may be increased (e.g.) for areas with a larger observed swath profile, or a height thereof may be adjusted to account for variations in the swath profile.

The swath profile may be used to determine an overall recommendation for the post-processing operation, e.g. in the case of recommending a number of support vehicles or the like for a collection operation. Alternatively, the swath profile can be measured at multiple points across the working environment, and be associated with a geographical location in the environment for that swath profile, e.g. in generating a swath profile map for the environment. The support or post-processing operation may then be adjusted "on the go" in accordance with the mapped swath profile for the environment.

### Further Alternative Embodiments

The camera 20 is provided as an example sensor unit, and the skilled person will appreciate that other sensor types may be utilised here. A stereocamera may be advantageously used, with stereo image data providing size or distance information in the sensor data which can be used, e.g. by the controller 102 for determining the swath profile measure. Alternatively, camera 20 may instead comprise a transceiver type sensor with received reflected measurement signals utilised, in use by the controller(s) 102 for determining the swath profile measure therefrom. Example transceiver type sensors may include RADAR, LIDAR, ultrasonic or time-of-flight sensor, for example.

The system may also be provided with a further sensor arrangement which can incorporate a ground height sensor. This may be used to determine a direct measure of a distance between the sensor arrangement and the ground surface. In the illustrated embodiments, this may be utilised by the controller(s) 102 as a calibration metric for the height measure, e.g. to understand the distance between the camera 20 and the ground surface and/or the swath and hence an expected size or control size for comparing future images thereto to determine the swath profile size, for example.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A control system for planning a post-processing operation in a working environment, the control system comprising one or more controllers, and being configured to:
receive sensor data from a sensor arrangement mounted or otherwise coupled to a mowing unit of a tractor-mower combination operating within the working environment and having a sensing region which encompasses a ground surface proximal to the mowing unit;
analyse the sensor data to determine a measure of a swath profile for a swath of crop material formed by the mowing unit, in use; and
determine, in dependence on the swath profile measure a recommended operational plan for a post-processing operation for the working environment.

2. A control system as claimed in claim 1, operably connected to an operational planning tool; and wherein the control system is configured to output the recommended operational plan to the operational planning tool for planning the post-processing operation.

3. A control system of claim 1 or claim 2, wherein the swath profile comprises a measure of an amount or distribution of crop material.

4. A control system of claim 3, wherein the swath profile comprises a measure of a size or shape of a swath produced by the tractor-mower combination.

5. A control system of any preceding claim, wherein the swath profile is used by the one or more controllers to determine a measure of crop yield for the working environment.

6. A control system of claim 5, wherein the crop yield informs the post-processing operation in relation to a number or capacity required for a collection apparatus for collecting the cut crop material from the working environment.

7. A control system of any preceding claim, wherein the controller(s) is configured to utilise the swath profile for determining a recommended operational setting for one or more components or machines performing or to perform the post-processing operation.

8. A control system of claim 7, wherein the recommended operational setting includes a recommended operational speed for the machine.

9. A control system of claim 7 or claim 8, wherein the recommended operational setting comprises a recommended operational setting of a crop pickup associated with a collection machine.

10. A control system of any of claims 7 to 9, where the post-processing operation includes a raking or tedding operation, and wherein the recommended operational setting includes an operational speed of one or more crop engaging components thereof.

11. A control system of any preceding claim, wherein determining the recommended operational plan includes the generation of a swath map representative of a swath profile characteristic for the working environment.

12. A method for planning a post-processing operation in a working environment, comprising:
receiving sensor data from a sensor arrangement mounted or otherwise coupled to a mowing unit of a tractor-mower combination operating within the working environment and having a sensing region which encompasses a ground surface proximal to the mowing unit;
analysing the sensor data to determine a measure of a swath profile for a swath of crop material formed by the mowing unit, in use; and
determining, in dependence on the swath profile measure a recommended operational plan for a post-processing operation for the working environment.

13. An agricultural machine, comprising:
a tractor;
a mowing unit operably coupled to the tractor for cutting crop material growing in a working environment;
a sensor arrangement operably mounted to the mowing unit and having a sensing region which encompasses a ground surface proximal to the mowing unit; and
a control system of any of claims 1 to 11;
wherein the one or more controllers are configured to provide the recommended operational plan to an operational planning tool for planning a post-processing operation for the working environment.
